# EUROPÄISCHE PATENTANMELDUNG

(11) **EP 4 813 507 A1**
(43) Veröffentlichungstag der Anmeldung: **30.09.2026**
(21) Anmeldenummer: 25167027.9
(22) Anmeldetag: 28.03.2025
(51) Int. Cl.: B01D 61/44, B01D 61/46, B01D 61/48, B01D 69/02, B01D 69/12, B01D 71/02, C08J 5/00

(54) **HERSTELLUNG VON LITHIUMHYDROXID DURCH VERBESSERTE LLTO-MEMBRANDIALYSE**

(71) Anmelder: Evonik Operations GmbH, 45128 Essen (DE)
(72) Erfinder: HYING, Christian, 46414 Rhede (DE); GORMAN, Elisabeth, 45721 Haltern am See (DE); STENNER, Patrik, 63452 Hanau (DE); STADTMÜLLER, Tobias, 63500 Seligenstadt (DE); ARNDT, Sebastian, 65462 Ginsheim Gustavsburg (DE)
(74) Vertreter: Evonik Patent Association

(57) **Zusammenfassung**

Die Erfindung betrifft die Herstellung von Lithiumhydroxid im Wege der Membranelektrodialyse, wobei die Membran ein Lithium-Lanthan-Titanoxid (LLTO) enthält. Ihr lag die Aufgabe zu Grunde, in der Elektrodialyse eine dauerhaft hohe Stromdichte zu erreichen. Erstaunlicherweise gelingt dies dadurch, dass LLTO anodenseitig vergoldet wird. Die Goldschicht bewirkt eine Erhöhung der Stromdichte. Es hat sich gezeigt, dass die Vergoldung von LLTO dann besonders gut gelingt, wenn das LLTO an seiner Oberfläche vor der Vergoldung einer Säurebehandlung unterzogen wird. Die Goldschicht haftet auf der säurebehandelten Oberfläche besser, wodurch der positive Effekt des Goldes länger aufrechterhalten wird.

## Beschreibung

Die Erfindung betrifft ein Verfahren zur Herstellung von Lithiumhydroxid im Wege der Membranelektrodialyse, wobei die Membran ein Lithium-Lanthan-Titanoxid (LLTO) enthält.

Für die Herstellung von Lithiumionenbatterien (LIB) wird denknotwenig Lithium (Li) benötigt. Aufgrund seiner hohen Reaktivität kommt Lithium in der Natur nicht als Reinstoff, sondern stets gebunden vor. Als Ausgangstoff für die Herstellung von LIB wird das Lithium in der Regel in Form von Lithiumhydroxid (LiOH) oder von Lithiumcarbonat (Li₂CO₃) verwendet.

In den meisten natürlichen Lagerstätten ist Li in Form von Lithiumoxid (Li₂O) oder von Salzen wie Lithiumchlorid (LiCl) vorhanden. Das Lithiumoxid ist Bestandteil von Erzen wie Pegmatit, wahrendessen Lithiumchlorid in den Laugen der Li-Salzseen gelöst vorliegt. Im Zuge des bergmännischen Abbaus von Lithiumerzen wird zunächst das Lithium durch Laugung mit Säure jeweils in eine lösliche Lithiumverbindung, wie Lithiumsulfat oder Lithiumchlorid und durch nachfolgende Schritte dann in Lithiumcarbonat (Li₂CO₃) überführt. In einem weiteren Prozessschritt kann das Lithiumcarbonat mit Branntkalk oder Calciumhydroxid in Lithiumhydroxid umgesetzt werden. Die Gewinnung von Li und dessen Umwandung in LiOH ist beschrieben in:
Wietelmann, U. and Steinbild, M. (2014). Lithium and Lithium Compounds. In Ullmann's Encyclopedia of Industrial Chemistry, (Ed.). DOI: 10.1002/14356007.a15_393.pub2.

Reiche Li-Lagerstätten sind bekannt, aber die Herstellung von LiOH aus den dort vorhandenen Li-Verbindungen ist sehr energieintensiv- und abwasserintensiv. Darüber hinaus besteht das strategisch begründete Bedürfnis, von den Eigentümern der Lagerstätte unabhängig zu sein.

Eine Lösung dieses Problems könnte darin bestehen, abgenutzte LIB stofflich aufzuarbeiten, sodass das darin enthaltene Lithium wieder als Rohstoff für Neubatterien verwendet werden kann.

Recyclingverfahren für LIB wurden in der Vergangenheit bereits zur technischen Reife entwickelt, jedoch meist mit dem Ziel auf die darin enthaltenen Metalle Fe, Ni, Mn, Co, Cu, Mg, Al zurückzugewinnen. Das Alkalimetall Li wurde in der Regel nicht zurückgewonnen, weil es auf Grund seiner hohen Reaktivität nicht einfach aus dem Batterieschrott abzutrennen ist und es in ausreichender Menge kostengünstig aus natürlichen Lagerstätten verfügbar war. Die Gewinnung vom Li aus gebrauchten LIB erschien lange Zeit schlicht unwirtschaftlich.

Inzwischen ist der gesellschaftliche und wirtschaftliche Druck gestiegen, Lithium aus gebrauchten LIB zurückzugewinnen. Der Erfolg dieses Vorhabens setzt voraus, dass rezykliertes Li in einer für die Produzenten von LIB akzeptablen Qualität angeboten werden kann, sodass sich die Herstellungsprozesse für LIB aus Recycling-Li nicht von denen aus bergmännisch gewonnenen Frisch-Li unterscheiden. Die Batteriequalität darf selbstredend nicht leiden. Folglich muss rezykliertes Li, insbesondere in Form von LiOH, sehr anspruchsvolle Spezifikationen hinsichtlich Reinheit erfüllen. Darüber hinaus muss das Verfahren zur Rückgewinnung von Li aus Altbatterien möglichst energieeffizient sein. Ebenso sollte das Verfahren wenig Wasser verbrauchen.

Bekannte Verfahren zur Rückgewinnung von Lithium aus Altbatterien haben zusammengestellt:
Pankaj K. Choubey et al.: Advance review on the exploitation of the prominent energy-storage element Lithium. Part II: From sea water and spent lithium ion batteries (LIBs), Minerals Engineering, Volume 110, 2017, Pages 104-121 DOI: 10.1016/j.mineng.2017.04.008.

Eine Technologie, die im vorstehenden Übersichtsartikel lediglich beiläufig als "LISM" erwähnt wird, ist die Elektrodialyse von Li-haltigen Wässern in Gegenwart von so genannten LiSICon-Membranen.

LiSICon steht für Lithium Super Ionic Conductor. Es handelt sich dabei um eine Klasse aus anorganischem Material, welches elektrisch isoliert, aber zugleich eine intrinsische Leitfähigkeit für Li-Ionen aufweist. Die Beschaffenheit von LiSICon wird als keramisch oder glasartig beschrieben. Der Transportmechanismus für Li ist in der Kristallstruktur des Materials begründet. Die Li-Ionen werden - vereinfacht gesprochen - durch die Kristalle "durchgereicht". Kommerziell verfügbare LiSICon-Materialien sind unter anderem Lithium-Aluminium-Titanphosphat (LATP), Lithium-Aluminium-Titan-Siliciumphosphat (LATSP), Lithium-Aluminium-Germaniumphosphat (LAGP) und Lithium-Lanthan-Titanoxid (LLTO). Diese Materialien wurden ursprünglich als Festkörper-Elektrolyt für LIB entwickelt. Eine Übersicht zu den Transportmechanismen von LiSICons, deren Kristallstruktur und Herstellung bieten jeweils:
Palakkathodi Kammampata et al.: Cruising in ceramics-discovering new structures for all-solid-state batteries-fundamentals, materials, and performances. Ionics 24, 639-660 (2018) DOI: 10.1007/s11581-017-2372-7,
Philippe Knauth: Inorganic solid Li ion conductors: An overview. Solid State Ionics, Volume 180, Issues 14-16, 2009, Pages 911-916, ISSN 0167-2738, https://doi.org/10.1016/j.ssi.2009.03.022.

Aufgrund ihrer selektiven Leitfähigkeit für Li-Ionen können LiSICon-Materialien als Membran zur Abtrennung von Li aus Li-haltigen Gemischen verwendet werden. Das Li muss in dem Gemisch in ionischer Form vorliegen, etwa als in Wasser gelöstes Li-Salz. Als treibende Kraft, um die Li-Ionen durch die LiSICon -Membran zu fördern, wird eine elektrische Spannung benötigt. Hierfür wird eine elektrochemische Zelle aufgebaut, die zwei Elektroden und eine LiSICon-Membran umfasst, welche die Zelle in zwei Kompartimente aufteilt. In jedem Kompartiment befindet sich eine Elektrode. Jeder Elektrode ist eine Polarität zugeordnet: Eine Elektrode bildet die Anode, die andere Elektrode die Kathode. Die Polarität der Elektroden wird durch eine Spannungsquelle bestimmt. Abhängig von der Polarität der im Kompartiment enthaltenen Elektrode werden die Kompartimente als anodisch oder kathodisch bezeichnet. An den Elektroden wird eine elektrische Spannung angelegt und das Li-haltige Wasser als Anolyt in das anodische Kompartiment eingefüllt. Das kathodische Kompartiment wird mit wässrigem Katholyt gefüllt. Aufgrund der Spannung zwischen Anode und Kathode werden die Kationen von der Kathode angezogen. Die Membran überträgt die Li-Kationen in das kathodische Kompartiment. Das Wasser in dem kathodischen Kompartiment wird daher mit Li angereichert, während das Wasser auf der anodischen Seite um Li abgereichert wird. Ein solcher Vorgang wird Membranelektrodialyse genannt.

Ab einer bestimmten Zellspannung erfolgt parallel zu der Membranelektrodialyse eine Elektrolyse des in den Elektrolyten enthaltenen Wassers. Dadurch wird an der Anode Sauerstoff O₂ und an der Kathode Wasserstoff H₂ gebildet. Die Ausbeute von Wasserstoff und Sauerstoff ist aber nicht mit einer reinen Elektrolyse von Wasser vergleichbar, da je nach Zusammensetzung des Anolyten und der darin enthaltenen Salze auch andere Elektrolyseprodukte entstehen können.

Verfahren zur Gewinnung von Lithium mit Hilfe von LiSICon Membranen sind bereits im Stand der Technik beschrieben.

So beschreiben Zhen Li et al. ein Verfahren, bei dem als Rohstoff das schwach Lithium-haltige Wasser des Roten Meeres verwendet wird:
Zhen Li et al.: Continuous electrical pumping membrane process for seawater lithium mining. Energy Environ. Sci., 2021, 14, 3152 DOI: 10.1039/d1ee00354b.

Die Arbeitsgruppe um Zhen Li verwendet LLTO als Membran. Das abgetrennte Zielprodukt ist Lithiumphosphat (Li₃PO₄), was für die Produktion von Lithium-Eisen-Phosphat (LFP) Batterien in Betracht kommt. LIB mit einem anderen Kathodenmaterial wie beispielsweise Nickel-Mangan-Cobalt-Oxid (NMC) oder Lithium-Mangan-Oxid (NMO) können damit nicht direkt hergestellt werden. Über einen Zeitraum von etwa 20h erzielten Zhen Li et al. bei einer Spannung von 3.25 V einen Strom von maximal 1.5 mA bei einer Membran mit 20mm Durchmesser und einer Stärke von 55 µm. Damit errechnet sich eine Stromdichte (3.14cm² Membranfläche) von 4.8 A/m² bzw. eine Stromdichte von 0.26 A/m² bei einer normierten Materialstärke von 1mm.

Ein Teil der Autoren des vorzitierten Aufsatzes sind auch als Erfinder auf der WO2022157624A1 genannt. Diese Schrift beschäftigt sich ebenfalls mit der Gewinnung von Li mit Hilfe einer LLTO-Membran in einer elektrochemischen Zelle. Die Kathode dieser Zelle ist aus Kupfer-Hohlfasern ausgeführt, beschichtet mit Platin/Ruthenium.

Auch die WO 2019055730 A1 beschäftigt sich mit der Abtrennung von Lithium mit Hilfe von LiSICon-Membranen. Konkret werden LLTO oder LAGP oder LATP genannt. Das abgetrennte Zielprodukt sind Li-Ionen.

Die unterschiedlichen LiSICon-Sorten, die als Membranwerkstoff zur Elektrodialyse von Li genutzt werden, unterscheiden sich hinsichtlich ihrer Leitfähigkeit gegenüber Lithium, Selektivität und Beständigkeit gegenüber unerwünschten Kationen, die als Verunreinigungen in den meisten lithiumhaltigen Wässern enthalten sind. Darüber hinaus gibt es erhebliche Kostenunterschiede zwischen den einzelnen LiSICon-Sorten.

Eine LiSICon-Sorte mit besonders hoher Li-Leitfähigkeit ist LAGTP, wie es etwa von der Arbeitsgruppe um Sofia Saffirio beschrieben wurde:
Sofia Saffirio et al.: Li1.4Al0.4Ge0.4Ti1.4(PO4)3 promising NASICON-structured glass-ceramic electrolyte for all-solid-state Li-based batteries: Unravelling the effect of diboron trioxide, Journal of the European Ceramic Society, Volume 42, Issue 3, 2022, Pages 1023-1032, DOI 10.1016/j.jeurceramsoc.2021.11.014.

Allerdings ist das LAGTP ist aufgrund seines Germanium-Anteils sehr teuer.

Ein vergleichsweise preisgünstiges LiSICon-Material ist das bereits von KNAUTH beschriebene Lithium-Lanthan-Titanoxid (LLTO).

Beim Einsatz dieses Materials ist aber zu berücksichtigen, dass LLTO verglichen mit anderen LiSICons eine geringere spezifische Leitfähigkeit für Li besitzt. Bei gegebener Materialstärke wirkt sich eine geringe intrinsische Li-Leitfähigkeit des Membranmaterials auf eine geringe Permeanz der Membran aus. Die Permeanz ist ein Maß für die Leitfähigkeit der Membran unter Berücksichtigung ihrer Stärke. Je höher die Permeanz der Membran, desto geringer ist der Bedarf an elektrischer Energie für den Dialyseprozess. LiSICon-Materialien mit geringer intrinsischer Li-Leitfähigkeit reduzieren daher die Permeabilität der Membran und steigern den Energiebedarf des Prozesses. Zwar ist es theoretisch möglich, die Materialstärke der Membran zu reduzieren und dadurch ihre Permeabilität wieder zu steigern. Allerdings kann die Stärke des Membranmaterials aus Stabilitätsgründen eine gewisse Mindeststärke nicht unterschreiten. Deswegen lässt sich die geringe spezifische Leitfähigkeit des LLTO in Praxis nicht einfach durch eine geringe Membranstärke ausgleichen. Das gilt umso mehr, wenn die Membran im Betrieb Verschleiß ausgesetzt ist.

Im Ergebnis erreicht eine LLTO-Membran stets eine geringere Permeanz als eine Membran aus einem LiSICon mit höherer intrinsischer Li-Leitfähigkeit. Dementsprechend erfordert ein LISM-Prozess mit LLTO-Membran mehr Energie als ein entsprechender Prozess mit LAGTP-Membran.

Die Gewinnung von Lithium mit einer LLTO-Membran erscheint deswegen vor allem dort attraktiv, wo preiswerte elektrische Energie zur Verfügung steht - insbesondere aus erneuerbaren Quellen. Angesichts der bisher noch immer nicht ausreichend verfügbaren, erneuerbaren elektrische Energie und die vergleichsweise hohen Kosten von Germanium-basierten LiSICons mit hoher Li-Leitfähigkeit besteht ein dringendes Bedürfnis dahingehend, die Li-Leitfähigkeit von preisweiten LLTO zu erhöhen.

Die EP4509635A1 beschreibt, wie ein als Membran geeigneter Schichtkörper aus LLTO und LAGP hergestellt werden kann. Ziel ist es dabei einen besseren Kompromiss zwischen Permeanz und Materialkosten zu erzielen.

Aber selbst eine LiSICon-Membran, welche hinsichtlich Materialkosten und Permeanz optimiert ist, hat im Vergleich zu organischen Membranmaterialen stehts den Nachteil einer hohen Anfälligkeit gegenüber Fremdionen: Kommt LiSICon mit Ionen in Kontakt, die nicht Lithium sind, setzen sich diese auf die freien Gitterplätze der Kristallstruktur und blockieren dort die Aufnahme von Lithium. Auf diese Weise nimmt die Lithiumleitfähigkeit stark ab; das LiSICon wird praktisch vergiftet. Aus diesem Grunde lassen sich die LiSICon-Membranen nur dort einsetzen, wo die Lithium-haltigen Stoffströme kaum Fremdionen enthalten. Insbesondere bei der elektrodialytischen Abscheidung von Lithium im Rahmen des Batterierecyclings ist eine gute Vorabscheidung der Fremdionen notwendig, weil diese Ströme viele solcher Verunreinigungen enthalten. Als besonders schädlich für LiSICon-Membranen haben sich Natrium-Kationen Na⁺ erwiesen. Dies trifft vor allem auf die Phosphat-basierten LiSICons zu, also etwa auf LAGTP oder LATSP. Die Vorabscheidung kann konkret mit organischen Membranen oder anderen Trennmechanismen erfolgen. Insbesondere dann, wenn die Vorabscheidung mit thermischen Trennverfahren erfolgt, steigt der Energiebedarf des Gesamtprozesses stark an.

Neben der Vergiftungsanfälligkeit und hohen Materialkosten wirkt sich weiteres Phänomen ungünstig auf die Wirtschaftlichkeit von LISM Prozesse aus: Ein elektrischer Stromfluss durch das LiSICon-Material.

Grundsätzlich gehören die LiSICons wie andere Gläser oder Keramiken zu der Klasse der elektrischen Nichtleitern (Isolatoren), denn sie weisen bei einer Temperatur von 23°C eine spezifische Leitfähigkeit für Elektronen γ (elektrische Leitfähigkeit) von weniger als 10⁻⁷ S/cm (10⁻⁹ S/m) auf. Meist beträgt die elektrische Leitfähigkeit von Phosphat-basiertem LiSICon-Material bei 23°C weniger als 10⁻¹² S/m oder sogar weniger als 10⁻¹⁶ S/m. Die Isolationseigenschaft bewirkt, dass innerhalb der elektrochemischen Zelle kein elektrischer Kurzschluss zwischen Anode und Kathode entsteht, selbst wenn beide Elektroden direkt auf der LiSICon- Membran platziert sind.

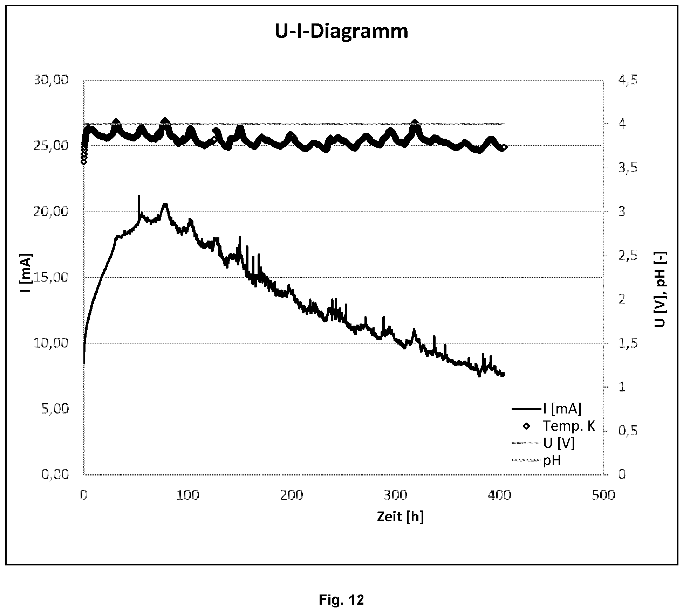

Diese Aussage gilt allerdings nicht für oxidische LiSICons und insbesondere nicht für LLTO. LLTO hat nämlich bei einer Temperatur von 50°C eine elektrische Leitfähigkeit von etwa 31.62*10⁻⁴ S/cm (vgl. Kammampata et al.; Fig. 12a), weswegen es aus elektrischer Sicht kein Isolator, sondern eher ein Halbleiter ist. Aufgrund seiner elektrischen Leitfähigkeit kann LLTO nicht als Separator in LIB eingesetzt werden, sondern allenfalls als Festkörperelektrolyt.

In der Elektrodialyse von Lithiumhydroxid lässt sich LLTO grundsätzlich einsetzen, allerdings nur mit einer geringen Stromeffizienz von etwa 20%, was ebenfalls auf die gewisse elektrische Leitfähigkeit des LLTO zurückzuführen ist. Hinzu kommt, dass die elektrische Leitfähigkeit von LLTO in der Elektromembrandialyse von Lithiumhydroxid mit der Zeit sogar zunimmt: Vermutlich hat dies mit Erosion von nichtmetallischen Anteilen aus der der Keramik zu tun, sodass metallische Elemente in der erodierten Oberfläche überrepräsentiert sind. So wird im Falle von LLTO Lithium und Lanthan aus der Oberfläche der Membran ausgetragen, wobei elektrisch leitfähiges nicht stöchiometrisches Titanoxid zurückbleibt. Auf dieses Weise erlaubt das Titanoxid eine Leitfähigkeit für Elektronen über die erodierte Oberfläche der Membran.

Aus elektrischer Sicht entstehen mit der Zeit Kriechströme, die nicht mehr zum Ladungsausgleich zur Verfügung stehen. Im Ergebnis wird nicht mehr der gesamte elektrische Strom *I*, der über die elektrische Spannungsquelle zwischen Anode und Kathode fließt, zum Transport der Lithium-Kationen genutzt, sondern nur noch ein Teil davon. Der Anteil des elektrischen Stroms, der in der Elektrodialyse tatsächlich für den Stofftransport genutzt wird, wird in der wissenschaftlichen Literatur meist als Stromeffizienz oder FARADAY-Effizienz bezeichnet. Diese Effizienz ist ein Maß für den stoffspezifischen Energiebedarf des Prozesses.

Neben der Stromeffizienz ist auch die Geschwindigkeit des Lithium-Transportes das wichtigste Maß zur Beschreibung eines solchen Prozesses. Diese Transportgeschwindigkeit kann in [g_{Lithium}/m² h] angegeben werden, und ist, bei einer 100%igen Stromeffizienz, proportional zur Stromdichte, die häufig in [A/m²] angegeben wird. Die Stromdichte i ist der Quotient aus dem über die Zelle fließenden Strom und der effektiven Fläche der Membran.

Um nun die Membran bzw. die Membranmaterialien, welche essentiell für eine Stofftrennung im hier beschriebenen Prozess sind, genauer mit wenigen Kennzahlen zu beschreiben, wird auch die lineare Stromdichte genutzt. Diese normiert die Stromdichte über die Stärke des Membranmaterials und wird in [A / m²] für eine 1mm starke Membran angegeben, bzw. mit der Einheit [ A mm / m²].

In der Patentliteratur formuliert beispielsweise die WO2024128590A1 in Absatz [0070] einen Parameter, welcher der Stromeffizienz entspricht oder zumindest proportional dazu ist. Diese Schrift hat es sich zur Aufgabe gemacht, die Stromeffizienz einer Elektrodialyse von Lithiumhydroxid zu erhöhen. Allerdings arbeitet die in WO2024128590A1 offenbarte Elektrodialyse mit einer Kombination aus einer Anionenaustauschmembran und einer bipolaren Membran, beide aus organischem Material. LiSICon-Membranen sind dagegen anorganische Kationenaustauschmembranen. Das Problem der durch Materialveränderungen bei LLTO-Membranen hervorgerufenen, reduzierten Stromeffizienz tritt bei organischen Membranen nicht auf.

Der Arbeitsgruppe um Kazuya Sasaki ist es kürzlich gelungen, die FARADAY-Effizienz einer Elektrodialyse mit LLTO-Membran dadurch zu erhöhen, indem sie Platin-basierte Elektroden direkt auf der Membran platzierten. Zusätzlich war die eingesetzte elektrochemische Zelle mit einer Nickel-haltigen Hilfselektrode ausgerüstet:
Sasaki, K., Shin-mura, K., Honda, S. et al. A three-electrode dual-power-supply electrochemical pumping system for fast and energy efficient lithium extraction and recovery from solutions. Commun Eng 3, 29 (2024). https://doi.org/10.1038/s44172-024-00174-8.

Die EP4134156A1 offenbart eine ionenleitende Verbundmembran. Die Verbundmembran umfasst eine poröse Stützstruktur, die mit einer ionenleitenden Beschichtung versehen ist. Die ionisch leitende Beschichtung kann LLTO enthalten. Die ionisch leitende Beschichtung kann punktuell oder auf der gesamten Fläche mit katalytisch aktiven Material versehen sein. Bei dem katalytisch aktiven Material kann es sich um Gold handeln. In den konkreten (Vergleichs)Beispielen 1B wird ein Nickelkatalysator verwendet, welcher sich auf einem LLTO-Sinterkörper befindet. Zusätzlich wird eine gitterförmige Gold-Elektrode aufgesputtert. Auf der anderen Seite wird eine gitterförmige Platin-Elektrode aufgesputtert. Die Verbundmembran wird zur Elektrodialyse von Lithium genutzt. Die Ausrichtung der Elektroden in der elektrochemischen Zelle ist nicht offenbart.

Die WO2024063872A1 beschreibt, dass eine LiSICon-Membran mechanisch bearbeitet werden soll, um ihre nicht näher definierte Perfomance in der Elektrodialyse von Lithium zu erhalten. Ziel der Bearbeitung ist es, die Stärke der Membran zu reduzieren. Alternativ kann die Membran geätzt werden. Der Ätzprozess wird nicht näher beschrieben.

Die JP2024155152A beschreibt eine für die Abtrennung von Lithium bestimmte LLTO-Membran, die auf beiden Seiten mit Platin beschichtet ist.

Aus der CN118267965A ist ein Verfahren zur Herstellung von LLTO bekannt, das mehrere Sinterschritte und eine Säurebehandlung umfasst. Das erhaltene LLTO wird als Absorber für Lithium genutzt.

In Hinblick auf diesen Stand der Technik lag der vorliegenden Erfindung die Aufgabe zu Grunde, in der Membranelektrodialyse von Lithiumhydroxid eine dauerhaft hohe lineare Stromdichte zu erreichen.

Erstaunlicherweise gelingt dies dadurch, dass LLTO anodenseitig vergoldet wird, nachdem das LLTO zuvor durch eine Säurebehandlung aktiviert wurde. Die Goldschicht bewirkt zum einen eine Erhöhung der der linearen Stromdichte und schützt zugleich die durch die Säure aktivierte Oberfläche. Beides führt zu einem dauerhaft geringeren spezifischen Energiebedarf des LISM-Prozesses. Damit sich diese Wirkweise möglichst uneingeschränkt entfaltet, sollte die Vergoldung möglichst vollflächig erfolgen, sodass das LLTO anodenseitig möglichst komplett von Gold abgedeckt ist. Nicht abgedeckt werden müssen Teile des LLTO, welche nicht mit dem Anolyten in Kontakt sind. Aber die Bereiche der Membran, die mit dem Anolyt in Kontakt kommen, also die aktive Fläche der Membran, sollte zumindest zu 80%, besser noch zu 90% bis 100% vergoldet sein. Eine punktuelle oder netzweise Vergoldung genügt nicht. Idealerweise findet kein direkter Kontakt zwischen LLTO und Anolyt statt, sondern ausschließlich mittelbar über das Gold.

Die Goldschicht muss nicht besonders dick sein. Es genügen einige wenige Lagen Goldatome. Es ist daher nur eine geringe Menge Gold erforderlich. Die Materialkosten für die Vergoldung sind vergleichsweise gering, insbesondere ist eine vergoldete LLTO Membran preisgünstiger herzustellen als eine LAGTP Membran, welche eine ähnliche Permeanz aufweist wie die vergoldete LLTO Membran.

Es hat sich gezeigt, dass die Vergoldung von LLTO dann besonders gut gelingt, wenn das LLTO an seiner Oberfläche vor der Vergoldung einer Säurebehandlung unterzogen wird. Die Säurebehandlung bewirkt eine Aktivierung der Oberfläche. Die Goldschicht haftet auf der säurebehandelten Oberfläche besser, wodurch der positive Effekt des Goldes länger aufrechterhalten wird.

Ein erster Gegenstand der Erfindung ist daher ein Verfahren zur Herstellung von Wasserstoff und Lithiumhydroxid mit den folgenden, nicht chronologischen Schritten:
a) Bereitstellen von mindestens einer elektrochemischen Zelle, wobei die elektrochemische Zelle mindestens die folgenden Merkmale aufweist:
   i. die elektrochemische Zelle umfasst ein erstes Kompartiment, welches mit einem wässrigen Anolyt gefüllt ist;
   ii. die elektrochemische Zelle umfasst ein zweites Kompartiment, welches mit einem wässrigen Katholyt gefüllt ist;
   iii. die elektrochemische Zelle umfasst eine zwischen dem ersten Kompartiment und dem zweite Kompartiment angeordnete, zweiseitige Membran, welche auf ihrer ersten Seite flächig vergoldet ist, dort über eine erste aktive Fläche mit dem Anolyt in Kontakt steht, und welche auf ihrer zweiten Seite über eine zweite aktive Fläche mit dem Katholyt in Kontakt steht, wobei die Membran ein Lithium-Lanthan-Titanoxid der Stöchiometrie LLTO enthält:

      Li₃ₓLa_{(2/3)-x□(1/3)-2x}TiO₃ (LLTO)

      worin in LLTO gilt: 0≤x≤0.16 und wobei das Lithium-Lanthan-Titanoxid optional dotiert sein kann mit mindestens einem Dotierelement, welches ausgewählt ist aus der Gruppe bestehend aus den folgenden Dotierelementen: Ag, Al, Zr, Nd, Sr, Ta, Y, Ge, Nb;
   iv. die elektrochemisch Zelle umfasst eine Anode, welche mit dem Anolyt kontaktiert ist;
   v. die elektrochemisch Zelle umfasst eine Kathode, welche in dem Katholyt kontaktiert ist;
   vi. die elektrochemische Zelle umfasst eine elektrische Spannungsquelle, welche über eine erste elektrische Leitung mit der Anode verbunden ist und welche über einer zweite elektrische Leitung mit der Kathode verbunden ist;
b) Bereitstellen von gelöstem Lithiumsalz im Anolyt;
c) Beaufschlagen der elektrochemischen Zelle mit einer zwischen Anode und Kathode wirkenden, ersten elektrischen Spannung U mit Hilfe der
   elektrischen Spannungsquelle;
d) Synthese von Lithiumhydroxid im Katholyt;
e) Synthese von Wasserstoff im Katholyt.

Wesentliches Merkmal dieses elektrodialytischen Verfahrens zur Herstellung von Lithiumhydroxid und Wasserstoff ist die Verwendung der anodenseitig flächig vergoldeten LLTO-Membran.

Die Herstellung einer solchen Membran wird hier ebenfalls offenbart. Die Herstellung der Membran weist die folgenden, nicht chronologischen Schritte auf:
a) Bereitstellen eines zweiseitigen, flachen Festkörpers, wobei der Festkörper ein Lithium-Lanthan-Titanoxid der Stöchiometrie LLTO enthält:

   Li₃ₓLa_{(2/3)-x□(1/3)-2x}TiO₃ (LLTO)

   worin in LLTO gilt: 0≤x≤0.16 und wobei das Lithium-Lanthan-Titanoxid optional dotiert sein kann mit mindestens einem Dotierelement, welches ausgewählt ist aus der Gruppe bestehend aus den folgenden Dotierelementen: Ag, Al, Zr, Nd, Sr, Ta, Y, Ge, Nb;
b) Bereitstellen einer Säure;
c) Bereitstellen von Gold;
d) Behandeln einer Seite des flachen Festkörpers mit der Säure;
e) Beschichten der säurebehandelten Seite des Festkörpers mit dem Gold;
f) Erhalt einer Membran, umfassend den flachen Festkörper, welcher auf seiner säurebehandelten Seite flächig vergoldet ist.

Maßgeblich ist hierbei die Säurebehandlung vor der Vergoldung.

Ebenfalls offenbart wird hier die nach Säurebehandlung flächig vergoldete LLTO-Membran. Diese Membran umfasst einen zweiseitigen flachen Festkörper, wobei der Festkörper ein Lithium-Lanthan-Titanoxid der Stöchiometrie LLTO enthält:

Li₃ₓLa_{(2/3)-x□(1/3)-2x}TiO₃ (LLTO)

worin in LLTO gilt: 0≤x≤0.16 und wobei das Lithium-Lanthan-Titanoxid optional dotiert sein kann mit mindestens einem Dotierelement, welches ausgewählt ist aus der Gruppe bestehend aus den folgenden Dotierelementen: Ag, Al, Zr, Nd, Sr, Ta, Y, Ge, Nb; wobei zumindest eine Seite des flachen Festkörpers säurebehandelt ist und wobei die säurebehandelte Seite des Festkörpers flächig vergoldet ist.

Die hier beschriebene Membran besteht teilweise oder vollständig aus herkömmlichen Lithium-Lanthan-Titanoxid, dessen Stöchiometrie LLTO unter anderem von KAMMAMPATA und KNAUTH erwähnt wird. Die Kristallstruktur von LLTO wurde ebenfalls von diesen Autoren beschrieben. LLTO ist kommerziell erhältlich, als Pulver oder auch in Gestalt von flachen Scheiben, die sich direkt als Membran einsetzten lassen.

Erfindungsgemäß ist die LLTO-Membran auf einer Seite mit einer flächigen Vergoldung versehen. Die Membran ist so in die elektrochemische Zelle einzubauen, dass die Goldschicht in Richtung der Anode ausgerichtet ist. Die kathodische Seite der Membran braucht nicht vergoldet sein.

Wichtig ist, dass die Membran auf der Anodenseite möglichst vollflächig mit einer Goldschicht versehen ist - eine punktuelle oder netzartige Vergoldung genügt nicht. Vorzugsweise sollte mindestens 80%, besser noch 90% bis 100% der Membran auf der Anodenseite vergoldet sein. Bezugsgröße ist hierbei der Flächeninhalt Aₐₐ der ersten aktiven Fläche der Membran, welche in Richtung der Anode weist. Die erste aktive Fläche der Membran ist der Teil der Membran, der mit dem Anolyt in Kontakt kommt. Die elektrochemisch nicht nutzbaren Flächenabschnitte der Membran, die etwa von Dichtungen belegt sind, zählen nicht dazu.

Die andere Seite der Membran, die in Richtung der Kathode weist, braucht nicht vergoldet sein. Produktionsbedingt kann aber eine geringfügige Vergoldung nicht ausgeschlossen sein. Vorzugsweise sollten höchstens 10 %, besser noch 0% bis 1% des Flächeninhalts Aₐₖ der zweiten aktiven Fläche vergoldet sein. Die zweite aktive Fläche ist der Teil der Membran, der mit dem Katholyt in Kontakt steht.

Erstaunlich ist, dass die Anode keinen elektrischen Kontakt mit der Goldschicht haben muss, um den gewünschten Effekt zu erzielen. Dies ist zunächst deshalb vorteilhaft, weil die Assemblierung der Zelle ohne Elektroden/Membran-Kontakt einfacher ist. Darüber hinaus zeigen experimentelle Untersuchungen, dass ein elektrischer Kontakt zwischen Membran und Elektrode zu einer stärkeren Alterung der Membran führt. Dementsprechend wird die Anode vorzugsweise beabstandet von der Membran angeordnet. Die Kathode kann auch beabstandet von der Membran sein. Insoweit unterscheidet sich der hier vorgeschlagene Zellaufbau von solchen, bei denen Edelmetallelektroden unmittelbar auf der Membran platziert sind. Das Beabstanden der Elektroden kann durch Einbau von Abstandshaltern, so genannten Spacern, zwischen Elektrode und Membran erfolgen.

Die Goldbeschichtung ermöglicht eine dauerhafte Elektrodialyse von lithiumhaltigen Wässern als Anolyt, die neben dem Lithium auch Verunreinigungen in Form von Kationen von B, Na, Mg, Al, Si, K, Ca, Mn, Co, Ni, Cu enthalten. Diese kationischen Verunreinigungen sind typisch für lithiumhaltige Wässer, die aus der Aufarbeitung gebrauchter Lithium-Ionen-Batterien stammen.

Besonders hervorzuheben ist die Resistenz der goldbeschichteten LLTO-Membran gegen Natrium. Der Anteil an Na⁺ Kationen im Anolyt kann zwischen 0 mol-% und 20 mol-% betragen, ohne dass die Lithiumleitfähigkeit der Membran signifikant eingeschränkt ist. Die molaren Anteile beziehen sich auf den Lithiumgehalt im Anolyt.

Neben den kationischen Verunreinigungen kann der Anolyt auch von Hydroxid verschiedene Anionen enthalten, etwa Sulfat, Hydrogensulfat, Carbonat, Hydro¬gencarbonat, Chlorid oder Fluorid. Konzentration dieser Fremd-Anionen sollte maximal 1 Mol zu 1 Mol der im Anolyt enthaltenen Hydroxid-Ionen betragen, weil sonst die Stromdichte des Prozesses stark abnimmt und die Alterung der Membran zunimmt.

Die Elektrodialyse kann so gefahren werden, dass neben Lithiumhydroxid und Wasserstoff an der Kathode auch Sauerstoff O₂ an der Anode entsteht. Das Verfahren weist dementsprechend noch den Schritt "Synthese von Sauerstoff im Anolyt" auf. Der gasförmige Sauerstoff O₂ wird durch die parallel zur Lithiumdialyse laufende Wasserelektrolyse gebildet. Abhängig von der Anwesenheit weiterer Elemente im Anolyt können aber auch andere Oxidationsprodukte oder Verbindungen an der Anode gebildet werden.

Die Elektrodialyse sollte bei einer Stromdichte / zwischen 10 A/m² und 500 A/m² durchgeführt werden. Die Stromdichte *i* berechnet sich als Quotient des elektrischen Stroms *I*, welcher über die elektrische Spannungsquelle fließt, und des Flächeninhalts *Aₐₐ* der ersten aktiven Fläche auf der ersten Seite der Membran: *i = I*/*A*ₐₐ*.* Die lineare Stromdichte wird dadurch erhalten, dass die Stromdichte durch die Stärke der Membran dividiert wird. Die elektrische Spannung U sollte dabei im Bereich von 3 V bis 12 V liegen. Bevorzugt ist ein Spannungsbereich von 4 V bis 8 V. Optimalerweise liegt die elektrische Spannung bei etwa 8 V.

Die Temperatur, bei der die elektrochemische Zelle betrieben wird, liegt optimalerweise zwischen 30°C und 60°C. Experimentelle Daten zeigen nämlich, dass die Effizienz der Elektrodialyse mit der Temperatur steigt. Eine höhere Temperatur sollte indes vermieden werden, weil die Alterung der Membran ab etwa 60°C zunimmt.

Die Stöchiometrie von Lithium-Lanthan-Titanoxid bewegt sich in dem in der Formel zu LLTO angegebenen Bereich für x von einschließlich 0 bis einschließlich 0.16.

Li₃ₓLa_{(2/3)-x□(1/3)-2x}TiO₃ (LLTO)

Die Anteile von Lithium und Lanthan können also variieren. Das in der Formel angegebene Quadrat □ symbolisiert die an den A-Seiten bestehenden Vakanzen; vgl. Aufsatz von KNAUTH in Abschnitt 2.1 und KAMMAMPATA et al. Seite 654 oben rechts mit weiteren Nachweisen. Zusätzlich kann das LLTO dotiert sein mit mindestens einem Dotierelement. Geeignete Dotierelemente sind: Ag, Al, Zr, Nd, Sr, Ta, Y, Ge, Nb. Konkrete Beispiele für LLTO sind Lithium-Lanthan-Titanoxide mit der Stöchiometrie Li_{0.33}La_{0.55}TiO₃ oder Li_{0.29}La_{0.57}TiO₃.

Im Zuge der Elektrodialyse wird an der Kathode Lithiumhydroxid bzw. Lithiumhydroxid-Monohydrat gebildet. Abhängig von seiner Konzentration im Katholyt liegt der gebildete Stoff in gelöster Form vor. Er wird aus dem Katholyt in einem entsprechenden Trennschritt abgetrennt. Auf diese Weise kann der Katholyt wiederverwertet werden. Vorzugsweise wird der Katholyt durch das zweite Kompartiment zirkuliert und das Lithiumhydroxid bzw. das Lithiumhydroxid-Monohydrat außerhalb des kathodischen Kompartiments aus dem Katholyt abgetrennt.

Die im erfindungsgemäßen Elektrodialyseverfahren eingesetzte Membran wird durch einseitige Vergoldung eines flachen Festkörper aus LLTO hergestellt. Die Vergoldung kann mit herkömmlichen Beschichtungsverfahren erfolgen, die zur physikalischen Gasphasenabscheidung (PVD Verfahren) gehören, wie etwa dem Sputtern. Alternativ kann auch eine chemische oder elektrochemische Vergoldung vorgenommen werden.

Wie bereits erwähnt, wird der LLTO-Festkörper vor der Beschichtung mit Gold einer Säurebehandlung unterzogen, um die Haltbarkeit der Goldschicht zu erhöhen. Die Säurebehandlung erfolgt durch Kontaktieren des LLTOs mit der Säure. Vorzugsweise handelt es sich bei der Säure um Hydrogenchlorid (Chlorwasserstoff - HCl). Alternativ kann Phosphorsäure oder Salpetersäure oder Schwefelsäure verwendet werden. Das Hydrogenchlorid wird vorzugsweise in flüssiger Form mit dem LLTO kontaktiert, vorzugsweise bei einer Temperatur von 20°C bis 80°C über einen Zeitraum von 20 h bis 80 h. Flüssiges Hydrogenchlorid ist einfachstenfalls eine wässrige Lösung von Hydrogenchlorid, nämlich Salzsäure. Es kann aber auch wasserfreies Hydrogenchlorid verwendet werden.

Es hat sich als vorteilhaft erwiesen, wenn die nicht zu vergoldende Seite des LLTO-Festkörpers Membran während der Säurebehandlung maskiert wird, damit die Säure die andere Seite nicht unnötig angreift. Die Säurebehandlung erfolgt dann im Wesentlichen einseitig. Die Maskierung kann einfachstenfalls dadurch erfolgen, dass die nicht zu vergoldende Seite des Festkörpers mit einem säurebeständigen Klebefilm abgeklebt wird. Alternativ kann die nicht zu behandelnde Seite des Festkörpers während der Säurebehandlung gegen die Säure abgedichtet werden. Dies kann beispielsweise durch Einbau in eine elektrochemische Zelle erfolgen: Die Säurebehandlung erfolgt dann in der elektrochemischen Zelle (in situ) durch Beaufschlagen des ersten Kompartiments mit der Säure. Eine elektrische Spannung muss während der in situ Behandlung mit Säure nicht an der Zelle angelegt werden.

Eine besonders bevorzugte Weiterbildung des Verfahrens zur Herstellung der Membran sieht vor, dass der Festkörper vor der Säurebehandlung gesintert wird. Dadurch wird das Kristallgefüge des Festkörpers verbessert. Die Sinterung erfolgt bei einer Endtemperatur im Bereich zwischen 900°C und 1200°C, welche über einen Zeitraum im Bereich von 1 h bis 16 h gehalten wird.

Die Erfindung und ihre vorteilhaften Eigenschaften sollen nun anhand von Experimenten näher erläutert werden. Hierfür zeigen:
- Figur 1:: Schematischer Aufbau einer ersten Messzelle;
- Figur 2:: Schematischer Aufbau einer zweiten Messzelle;
- Figur 3:: Schematischer Aufbau einer dritten Messzelle;
- Figur 4:: Schematischer Aufbau einer vierten Messzelle;
- Figur 5:: REM Aufnahme Oberfläche LLTO-Festkörper vor der Sinterung;
- Figur 6:: REM Aufnahme Oberfläche LLTO-Festkörper nach der Sinterung;
- Figur 7:: REM Aufnahme Oberfläche LLTO-Festkörper nach der Säurebehandlung gemäß Beispiel 2;
- Figur 8:: REM Aufnahme Oberfläche LLTO-Festkörper nach der Säurebehandlung gemäß Beispiel 6;
- Figur 9:: Fotographie der vergoldeten Oberfläche nach 60h Elektrodialyse in Beispiel 19 (nicht erfindungsgemäß);
- Figur 10:: Fotographie der vergoldeten Oberfläche nach 600h Elektrodialyse in Beispiel 2;
- Figur 11:: U/I-Diagramm zu Beispiel 28;
- Figur 12:: U/I-Diagramm zu Beispiel 29;
- Figur 13:: U/I-Diagramm zu Beispiel 31;
- Figur 14:: Graphische Darstellung der Stromsteigerung über die Temperatur zu Beispiel 33;
- Figur 15:: Graphische Darstellung der Stromsteigerung über die Spannung zwischen 4 V und 8 V zu Beispiel 34;
- Figur 16:: Graphische Darstellung der Stromsteigerung über die Spannung zwischen 4 V und 12 V zu Beispiel 34.

### 0. Versuchsaufbauten

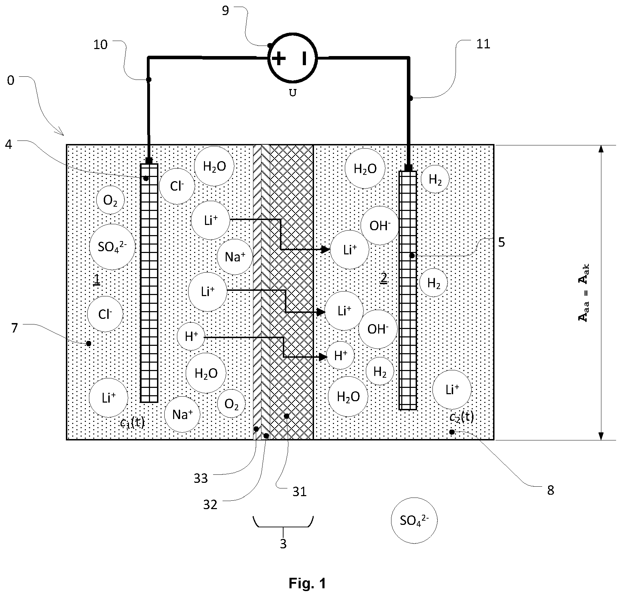

Figur 1 zeigt schematisch den ersten Versuchsaufbau einer elektrochemischen Zelle 0.

Die elektrochemische Zelle 0 umfasst ein erstes Kompartiment 1 und ein zweites Kompartiment 2. Beide Kompartimente 1, 2 sind durch eine Membran 3 voneinander getrennt. Die Membran 3 ist hier als kreisförmige Flachmembran mit einem Durchmesser von 20 mm ausgeführt (in der Schnittdarstellung der Figur ist das nicht zu erkennen). Andere Membranformen sind möglich. Die Materialität der Membran 3 wird später detailliert erläutert.

Innerhalb des erstes Kompartiments 1 ist eine erste Elektrode, nämlich eine Anode 4 angeordnet; eine zweite Elektrode, nämliche eine Kathode 5, befindet sich im zweiten Kompartiment 2.

Als Anode 4 und Kathode 5 wurde jeweils eine runde Scheibe mit einem Durchmesser von 19.5 mm und einer Stärke von 1 mm verwendet. Bei dem Material handelte es sich jeweils um ein Titan-Streckblech, beidseitig beschichtet mit IrTi-Mischoxid, 12 g Ir/m², 1 AF D1.5 mm von der Fa. Metakem GmbH, 61250 Usingen, Deutschland.

In das erste Kompartiment 1 ist mit einem Anolyt 7 gefüllt. Bei dem Anolyt 7 handelt es sich um eine Flüssigkeit enthaltend Wasser und darin gelöste Lithium-Salze. Das bedeutet, der Anolyt 7 enthält frei bewegliche Lithium-Kationen Li⁺ und frei bewegliche Anionen der gelösten Salze, zum Beispiel Chlorid Cl⁻ oder Sulfat SO₄²⁻. Da diese Ionen in der wässrigen Flüssigkeit beweglich sind, handelt es sich bei dem Anolyt 7 um einen flüssigen Elektrolyten. Der Anolyt 7 kann neben Lithium auch andere Kationen enthalten, etwa Na⁺.

Das zweite Kompartiment 2 wird mit einem Katholyt 8 gefüllt. Dieser enthält auch Wasser und darin gelöstes Salz, also frei bewegliche Anionen und Kationen. Das im Katholyt 8 enthaltene Salz muss kein Lithiumsalz sein, es können auch Natrium, Kalium, Beryllium, Magnesium oder Calcium-Salze im Katholyt gelöst sein. Bevorzugt enthält der Katholyt 8 aber Lithium-Kationen Li⁺ und zwar möglichst mehr Li⁺ als andere Kationen. Enthält der Katholyt 8 zu viele andere Kationen als Li⁺ wird das Zielprodukt LiOH in geringer Reinheit erhalten. Neben den Kationen enthält der Katholyt auch die Anionen der darin gelösten Salze. Der Katholyt ist daher ebenfalls als flüssiger Elektrolyt aufzufassen. Die genaue Zusammensetzung der Elektrolyten ist in den folgenden Beispielen beschrieben. Eine Vermischung der beiden Elektrolyten 7, 8 ist ausgeschlossen, weil die Membran 3 flüssigkeitsdicht ist.

Die beiden Elektrolyten 7, 8 stehen jeweils in Kontakt mit den korrespondierenden Elektroden: Der Anolyt 7 hat Kontakt mit der Anode 4, der Katholyt 8 mit der Kathode 5. Da die Anode 4 und die Kathode 5 als poröse Streckmetalle ausgeführt sind, dringt der Elektrolyt in die jeweilige Elektrode ein.

In dem in Figur 1 dargestellten Messaufbau sind beide Elektroden 4, 5 von der Membran 3 beabstandet angeordnet. Das bedeutet, es besteht kein elektrischer Kontakt sowohl zwischen der Membran 3 und der Anode 4, als auch zwischen der Membran 3 und der Kathode 5. Gleichwohl besteht Kontakt zwischen der Membran 3 und dem Anolyt 7 und zwischen der Membran 3 und dem Katholyt 8: Der Kontakt zwischen der Membran 3 und dem Anolyt 4 erfolgt über eine erste aktive Fläche mit dem Flächeninhalt *A*ₐₐ. Der Kontakt zwischen der Membran 3 und dem Katholyt 8 erfolgt über eine zweite aktive Fläche mit dem Flächeninhalt *A*ₐₖ. Die beiden aktiven Flächen sind parallel zueinander und erstecken sich jeweils senkrecht zur Zeichenebene der Figur 1. Mithin ist jeweils lediglich eine Dimension der beiden aktiven Flächen gezeichnet und bemaßt. Die beiden aktiven Flächen sind in dem gezeigten Messaufbau gleich groß: Sie bestimmen sich aus der Fläche der Membran 3 abzüglich der Bereiche der Membran, die nicht mit den Elektrolyten in Kontakt steht. Das sind typischerweise die Flächen der Membran, die mit einem Dichtelement in Kontakt stehen. Um die Berechnung der aktiven Fläche zu vereinfachen, wird die Abdichtung der Membran vernachlässigt, obwohl in der Praxis eine Abdichtung über einen hier nicht dargestellten O-Ring besteht. Der Flächeninhalt *A*ₐₖ = *A*ₐₐ der beiden aktiven Flächen berechnet sich daher aus dem Kreisdurchmesser der Membran von 20 mm zu jeweils etwa 314 mm².

Die Membran 3 weist einen Schichtaufbau auf: Die Grundlage bildet ein kreisscheibenförmiger Festkörper 31 aus Lithium-Lanthan-Titanoxid mit der Stöchiometrie Li_{0.33}La_{0.55}TiO₃. Der Festkörper 31 wurde von Toshima Manufacturing Co., Ltd., Higashimatsuyama, Japan kommerziell beschafft. Der Festkörper 31 wurde in den Laboren der Anmelderin zunächst gesintert und dann einseitig säurebehandelt, sodass er eine säurebehandelte Oberfläche 32 erhalten hat. Die säurebehandelte Oberfläche 32 wurde anschließend in den Laboren der Anmelderin vollflächig mit einer Goldschicht 33 versehen. Die Sinterung, Säurebehandlung und Vergoldung des Festkörpers 31 ist in der nachfolgenden Versuchsbeschreibung genauer ausgeführt. Für den Versuchsaufbau ist bedeutsam, dass die Membran 3 so in die Zelle 0 eingebaut wird, dass sich die Goldschicht 33 auf der Seite der Anode 4 befindet. Dies bedeutet, der Anolyt 7 kontaktiert die Membran 3 über ihre Goldschicht 33. Der Flächeninhalt der Goldschicht 33 entspricht dem Inhalt der ersten aktiven Fläche *A*ₐₐ.

Die elektrochemische Zelle 0 ist mit einer elektrischen Spannungsquelle 9 ausgestattet. Die elektrische Spannungsquelle 9 ist über eine erste elektrische Leitung 10 mit der Anode 4 verbunden und über einer zweite elektrische Leitung 11 mit der Kathode 5. Die Polarität ist so gewählt, dass der Plus-Pol der elektrischen Spannungsquelle 9 mit der Anode 4 verbunden ist, der Minus-Pol mit der Kathode 5.

Um die elektrochemische Zelle 0 in Betrieb zu nehmen, wird die elektrische Spannungsquelle 9 eingeschaltet, sodass eine von der elektrischen Spannungsquelle 9 erzeugte elektrische Spannung U zwischen Anode 4 und Kathode 5 wirkt. Der Betrag der Spannung U und ihre Polarität werden im einfachsten Fall als Gleichspannung konstant gehalten.

Hinsichtlich der Haltung der beiden Elektrolyten 7,8 sind grundsätzlich zwei Betriebsweisen möglich: Chargenbetrieb (Batch) oder kontinuierlicher Betrieb. Im Batch-Betrieb bleibt eine bestimmte Portion des Elektrolyten 7, 8 über die Versuchsdauer in dem jeweiligen Kompartiment 1, 2 enthalten. Im kontinuierlichen Betrieb wird andauernd eine frische Portion des jeweiligen Elektrolyten in das zugehörige Kompartiment nachgefüllt und dasselbe Volumen aus dem Kompartiment abgezogen. Auf diese Weise bleibt der Füllstand des Kompartiments im kontinuierlichen Betrieb gleich, der Elektrolyt wird aber durchgängig erneuert. Es sind auch Mischformen von Batch- und Konti-Betrieb möglich, etwa dass der Elektrolyt in größeren Abständen während des Versuches teilweise ausgetauscht wird (semi-batch).

Unabhängig von der Elektrolythaltung finden bei eingeschalteter elektrischer Spannungsquelle 9 in der elektrochemischen Zelle 0 zwei elektrochemische Prozesse gleichzeitig statt: Eine Elektromembrandialyse und eine Wasserelektrolyse.

Im Zuge der Elektromembrandialyse werden Li⁺ - Kationen aus dem ersten Kompartiment 1 über die Membran 3 in das zweite Kompartiment 2 zur Kathode 5 bewegt. Treibende Kraft ist die Spannung U. Ermöglicht wird der Transport über flüssigkeitsdichte Membran 3 durch die intrinsische Leitfähigkeit für Li⁺- Kationen des LLTO, aus dem der Festkörper 31 der Membran 3 besteht. Die Goldschicht 33 auf dem Festkörper 31 beeinträchtigt die Leitfähigkeit der Membran 3 für Lithium-Kationen nicht. Da LLTO eine höhere Leitfähigkeit für Lithium-Kationen als für andere Kationen aufweist (Kationenselektivität), wandern die Lithium-Kationen Li⁺ bevorzugt durch die Membran 3 in Richtung der Kathode 5, wohingegen die Natrium-Kationen Na⁺ tendenziell in dem ersten Kompartiment 1 verbleiben. Die Kationenselektivität der Membran 3 bewirkt daher eine Trennung von Li⁺ und Na⁺. Die im Anolyt 7 enthaltenen Anionen Cl⁻ und SO₄²⁻verbleiben ohnehin im ersten Kompartiment 1 bei der Anode 4 und bilden ggf. Gas. Genauer gesagt, wird an der Anode 4 bei Anwesenheit von Chlorid Chlorgas gebildet, welches sich in den wässrigen Lösungen löst, ansonsten wird durch die Elektrolyse vor allem Sauerstoff O₂ gebildet.

Im Zug der Wasserelektrolyse wird im Elektrolyten 8 enthalte Wasser H₂O wird an der Kathode reduziert, sodass an der Kathode Hydroxid-Ionen OH⁻ und Wasserstoff H₂ entstehen. Die im Katholyt entstehenden Hydroxid-Ionen OH⁻ werden zwar von der Anode 4 angezogen, können die Membran 3 aber kaum überwinden, da LLTO keine nennenswerte Anionenleitfähigkeit aufweiset. Die so im zweiten Kompartiment gefangenen OH⁻ Anionen bilden mit den dort neu ankommenden Li⁺ Kationen Lithiumhydroxid LiOH. Dieses liegt erst in Form gelöster Ionen vor und bei Überschreiten der Löslichkeitsgrenze auch in fester Form.

Im laufenden Batch-Betrieb ändert sich ständig die Konzentration von Li⁺ Kationen in beiden Elektrolyten: Die Konzentration von Lithiumkationen *c*₁(*t*) nimmt im Anolyt 7 grundsätzlich ab, währenddessen die Li⁺-Konzentration im Katholyt *c*₂(*t*) grundsätzlich zunimmt. Der Prozess kommt dann zum Erliegen, wenn kein Lithium mehr im Anolyt 7 verfügbar ist. In kontinuierlichen Betrieb wird ein stationärer Fließprozess gefahren, bei dem die Konzentrationen *c*₁(*t*) und *c*₂(*t*) bestmöglich konstant gehalten werden. Dies gelingt durch kontinuierliches Zudosieren von frischem Lithium-Salz in den Anolyt bzw. durch kontinuierliches Abtrennen von Lithiumhydroxid aus dem Katholyt. Bevorzugt werden Anolyt und Katholyt kontinuierlich aus beiden Kompartimenten abgezogen und nach dem Zudosieren des frischen Li-Salzes bzw. des Abtrennen des Lithiumhydroxids rezykliert. Dies ist der Einfachheit halber in den Figuren nicht dargestellt.

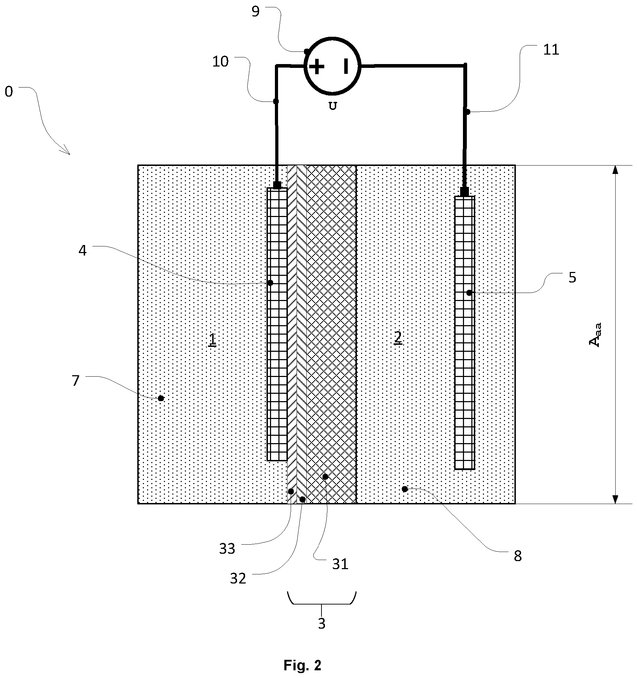

Figur 2 zeigt schematisch den zweiten Versuchsaufbau einer elektrochemischen Zelle 0. Der zweite Versuchsaufbau entspricht dem in Figur 1 dargestellten ersten Versuchsaufbau mit dem Unterschied, dass die Anode 4 direkt auf der anodenseitigen Goldschicht 33 der Membran 3 angeordnet ist. Auf diese Weise besteht ein elektrischer Kontakt zwischen der Anode 4 und der Goldschicht 33. Die Goldschicht 33 wird so von der elektrischen Spannungsquelle 9 positiv gepolt. Aus elektrochemischer Sicht wird die Goldschicht 33 so ein Teil der Anode der in Figur 2 dargestellten elektrochemischen Zelle 0. Die Kathode 5 ist bei dem zweiten Versuchsaufbau weiterhin von der Membran 3 beabstandet im zweiten Kompartiment 2 angeordnet, ohne elektrischen Kontakt zur Membran 3. Die beiden in den jeweiligen Kompartimenten 1, 2 befindlichen jeweiligen Elektrolyten 7, 8 haben weiterhin Kontakt zu den jeweiligen Elektroden 4, 5.

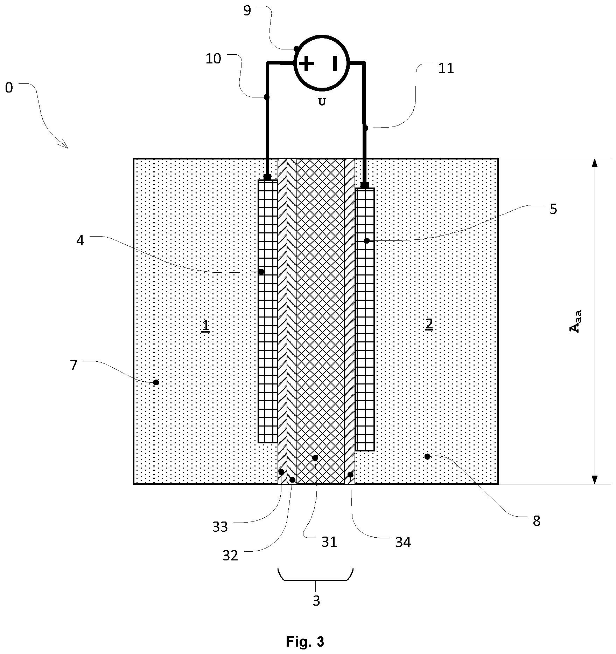

Figur 3 zeigt schematisch den dritten Versuchsaufbau der elektrochemischen Zelle 0. In dem dritten Versuchsaufbau wird eine Membran 3 verwendet, die beidseitig mit Gold beschichtet ist. Neben der ersten Goldschicht 33 auf der Seite der Anode 4 weist die Membran 3 eine zweite Goldschicht 34 auf der Seite der Kathode 5 auf. Die zweite Goldschicht 34 ist direkt auf den gesinterten LLTO-Festkörper 31 aufgebracht, ohne eine vorhergehende Säurebehandlung. Davon abgesehen, entspricht der dritte Versuchsaufbau dem in Figur 2 dargestellten zweiten Versuchsaufbau mit dem Unterschied, dass die Kathode 5 direkt auf der zweiten Goldschicht 34 der Membran 3 angeordnet ist. Auf diese Weise besteht ein elektrischer Kontakt zwischen der Kathode 5 und der zweiten Goldschicht 34. Die zweite Goldschicht 34 wird so ein formaler Bestandteil der Kathode 5.

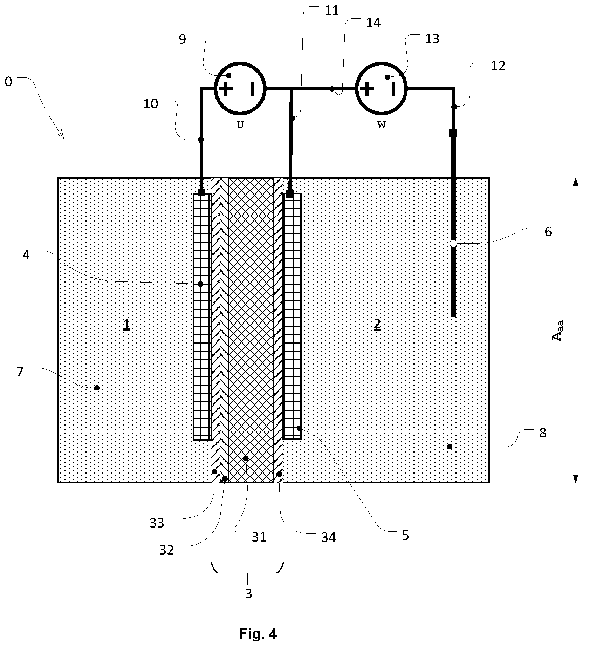

Figur 4 zeigt schematisch den vierten Versuchsaufbau der elektrochemischen Zelle 0. Der vierte Versuchsaufbau entspricht dem in Figur 3 dargestellten dritten Versuchsaufbau mit dem Unterschied, dass die elektrochemische Zelle 0 zusätzlich mit einer Hilfselektrode 6 ausgerüstet ist. Die Hilfselektrode 6 befindet sich im zweiten Kompartiment 2 und ist dort mit dem Katholyt 8 kontaktiert. Die Hilfselektrode 6 kann auch außerhalb des zweiten Kompartiment 2 angeordnet sein. Wichtig ist nur, dass sie Kontakt mit dem Katholyt 8 hat. Bei der Hilfselektrode 6 handelt es sich um einen Nickel-Draht. Die Hilfselektrode 6 ist über eine dritte elektrische Leitung 12 mit dem negativen Pol einer zweiten elektrischen Spannungsquelle 13 verbunden. Der positive Pol der zweiten elektrischen Spannungsquelle 13 ist mit dem negativen Pol der ersten elektrischen Spannungsquelle 9 verbunden über eine vierte elektrische Leitung 14. Die beiden elektrischen Spannungsquellen 9, 13 sind auf diese Weise in Reihe geschaltet. Über die zweite elektrische Spannungsquelle 13 kann eine zweite elektrische Spannung Wzwischen Kathode 5 und Hilfselektrode 6 angelegt werden.

### Beispiel 1: Sintern eines Festkörpers aus LLTO

Kreisrunde, flache Scheiben mit der Stärke von 0.8 mm aus Lithium-Lanthan-Titanoxid (Toshima Manufacturing Co., Ltd., Higashimatsuyama, Japan) mit der Stöchiometrie Li_{0.33}La₀.₅₅TiO₃ (laut Herstellerangabe) wurde für 10 Stunden bei 1100°C in einem Ofen gesintert. Der Ofen war mit Umgebungsluft gefüllt und wurde bei Normaldruck betrieben.

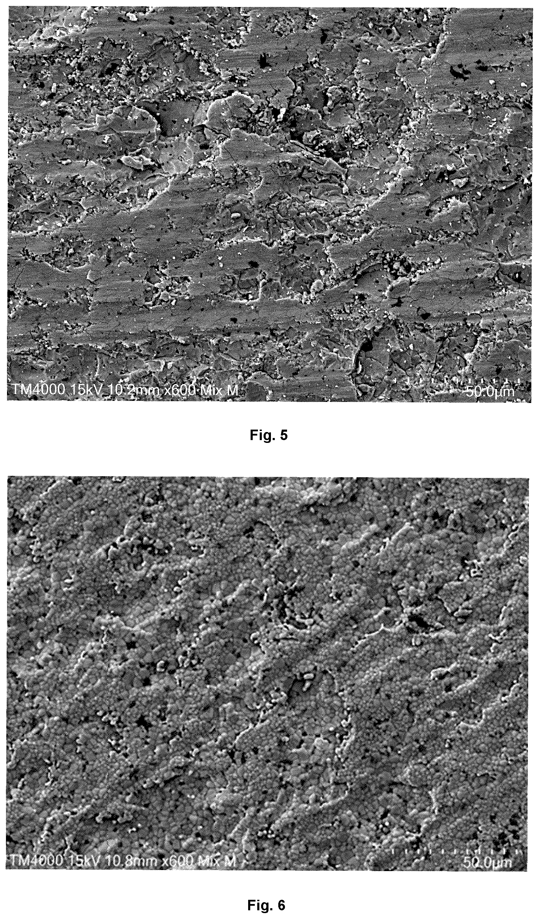

Figur 5 zeigt eine REM-Aufnahme der Oberfläche einer Scheibe vor der Sinterung. Figur 6 zeigt eine REM-Aufnahme der Oberfläche einer Scheibe nach der Sinterung.

### Beispiele 2 bis 9: Säurebehandlung der Oberfläche des gesinterten Festkörpers

Die gemäß Beispiel 1 gesinterten Scheiben wurde bei verschiedenen Temperaturen über verschiedene Zeiträume mit verschiedenen mineralischen Säuren behandelt. Bei den Säuren handelte es sich um 98%ige Schwefelsäure (H₂SO₄), 65%ige Phosphorsäure (H₃PO₅), 30%ige Salpetersäure (HNO₃), 37%ige Salzsäure (HCl). Alle Säuren lagen jeweils als wässrige Lösung in der angegebenen Konzentration vor. Die Variationen von Temperatur, Zeit und Säure sind in Tabelle 1 niedergelegt. Jede Scheibe wurde genau einer Behandlungsvariante unterzogen. Die Behandlung erfolgt durch Eintauchen in die Säure (ex situ) oder einseitig maskiert in einer elektrochemischen Zelle eingebaut ohne angelegter Spannung (in situ). Die Säure wird dafür in das erste, anodische Kompartiment gefüllt.

**Tabelle 1: Übersicht Säurebehandlung**

| Beispiel | 2 | 3 | 4 | 5 | 6 | 7 | 8 | 9 |
|---|---|---|---|---|---|---|---|---|
| Säure | H₂SO₄ | H₃PO₅ | HNO₃ | HCl | HCl | HCl | HCl | HCl |
| Dauer | 16 h | 16 h | 16 h | 76 h | 24 h | 76 h | 76 h | 76 h |
| Temperatur | 150 °C | 150 °C | 60 °C | 60 °C | 60 °C | 25 °C | 60 °C | 60 °C |
| Ort | ex situ | ex situ | ex situ | ex situ | ex situ | ex situ | ex situ | in situ |

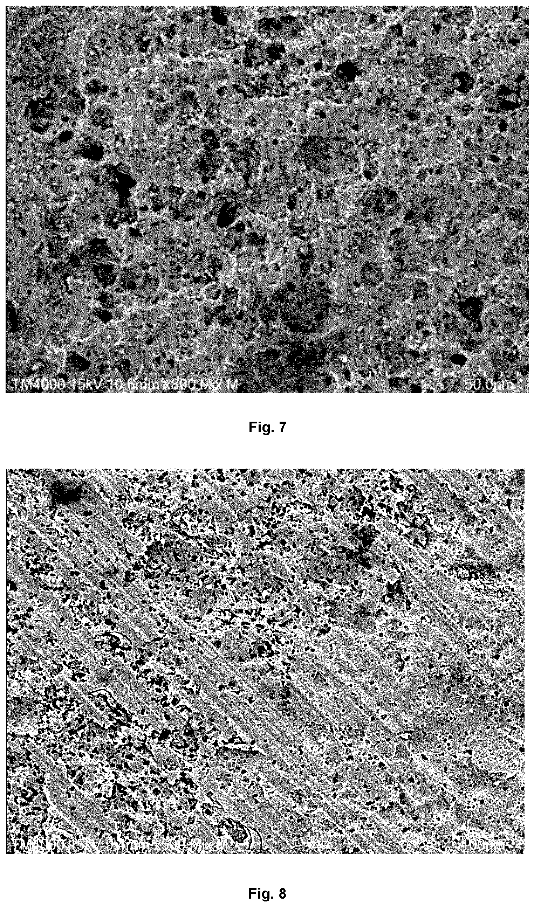

Figur 7 zeigt eine REM-Aufnahme der säurebehandelten Oberfläche nach Beispiel 2.

Figur 8 zeigt eine REM-Aufnahme einer säurebehandelten Oberfläche nach Beispiel 6.

### Beispiel 10: Vergoldung der Oberfläche des gesinterten Festkörpers (nicht erfindungsgemäß)

Eine gemäß Beispiel 1 gesinterte Scheibe, welche keiner Säurebehandlung unterzogen worden war, wurde auf einer Seite vollflächig mit Gold besputtert. Dabei wurden die folgenden Prozessparameter an einem Quorum Modell Q 150R ES plus eingestellt: Sputter current: 20 mA; max. bei einer Sputter time 12 Min.; Thickness 25 nm; Tooling Factor 2.3. Auf diese Weise wurde der gesinterte Festkörper mit einer Goldschicht versehen. Die Schichtdicke betrug zwischen ca.25 nm. Die Schichtdicke wurde durch Wägung bestimmt.

### Beispiele 11 bis 18: Vergoldung der Oberfläche von säurebehandelten Festkörper

Jeweils eine der gemäß der Beispiele 2 bis 9 säurebehandelten Scheiben wurde auf einer Seite vollflächig mit Gold besputtert. Dabei wurden die folgenden Prozessparameter an einem Quorum Modell Q 150R ES plus eingestellt: Sputter current: 20 mA; max. bei einer Sputter time 10 bis 20 Min.; Thickness 25 nm; Tooling Factor 2.3. Auf diese Weise wurde der gesinterte, säurebehandelte Festkörper mit einer Goldschicht versehen. Durch Variation der Sputter-Zeit wurde die Schichtdicke zwischen 10 nm und 40 nm eingestellt.

Die in den Sputterversuchen als Substrat verwendeten Scheiben und die erzielten Schichtdicken sind in Tabelle 2 niedergelegt.

**Tabelle 2: Übersicht Vergoldung säurebehandelter Substrate**

| Beispiel | 11 | 12 | 13 | 14 | 15 | 16 | 17 | 18 |
|---|---|---|---|---|---|---|---|---|
| Substrat aus Beispiel | 2 | 3 | 4 | 5 | 6 | 7 | 8 | 9 |
| Vergoldung, Dicke [nm] | 40 | 40 | 30 | 25 | 10 | 25 | 25 | 25 |

### Beispiel 19: Elektrodialyse mit Membran aus Beispiel 10 (nicht erfindungsgemäß)

Der in Beispiel 10 erhaltene, ohne vorherige Säurebehandlung vergoldete Festkörper wurde als Membran in eine elektrochemische Zelle eingebaut.

Als Anolyt wurde eine 1M LiOH - Lösung in Wasser verwendet. Katholyt war eine wässrige Lösung von 5 mM LiOH (0.005 mol/L). Die Temperatur betrug 20°C. Die Spannung U betrug 4 V. Die lineare Stromdichte betrug 0.25 mA/cm² bei 1mm Membrandicke.

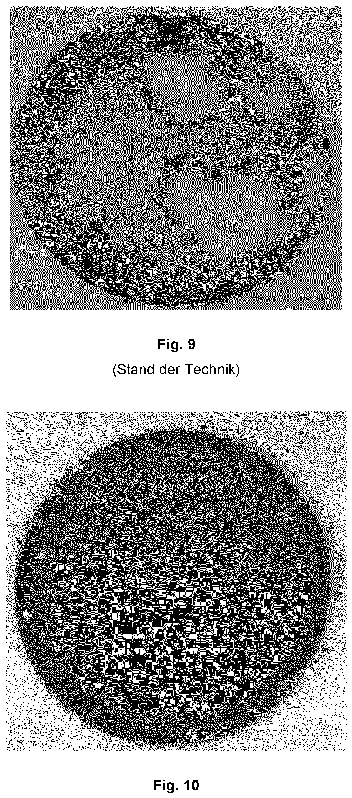

Nach 60h Laufzeit wurde Elektrodialyse unterbrochen und die Membran entnommen. Die Goldbeschichtung hatte sich großflächig von dem LLTO-Festkörper abgelöst; vgl. Figur 9.

### Beispiel 19a: Elektrodialyse mit beidseitig vergoldeter, unbehandelten Membran (nicht erfindungsgemäß)

Eine gemäß Beispiel 1 gesinterte Scheibe, welche keiner Säurebehandlung unterzogen worden war, wurde auf beiden Seiten vollflächig mit Gold besputtert. Dabei wurden die folgenden Prozessparameter an einem Quorum Modell Q 150R ES plus eingestellt: Sputter current: 20 mA; max. bei einer Sputter time 16 Min.; Thickness 40 nm; Tooling Factor 2.3. Auf diese Weise wurde der gesinterte Festkörper mit je einer Goldschicht auf jeder der beiden Seiten versehen. Die Schichtdicke betrug jeweils ca.40 nm. Als Anolyt wurde eine 1M LiOH - Lösung in Wasser verwendet. Katholyt war eine wässrige Lösung von 5 mM LiOH (0.005 mol/L). Die Temperatur betrug 20°C. Die Spannung U betrug 4 V. Die lineare Stromdichte betrug 0.25 mA/cm² bei 1 mm Membrandicke.

### Beispiele 20 bis 27: Elektrodialyse mit Membran aus Beispielen 11 bis 18

Die in den Beispielen 11 bis 18 erhaltenen, säurebehandelten und vergoldeten Festkörper wurden jeweils als Membran in eine elektrochemische Zelle gemäß Versuchsaufbau 1 eingebaut.

Als Anolyt wurde eine 1M LiOH - Lösung in Wasser verwendet. Katholyt war eine wässrige Lösung von 5 mM LiOH (0.005 mol/L). Die Temperatur betrug 20°C. Die Spannung U betrug 4 V. Die erreichten linearen Stromdichten sind in Tabelle 3 niedergelegt.

**Tabelle 3: Übersicht Elektrodialyse mit vergoldeten, säurebehandelten Membranen**

| Beispiel Elektrodialyse | 20 | 21 | 22 | 23 | 24 | 25 | 26 | 27 |
|---|---|---|---|---|---|---|---|---|
| Membran aus Beispiel | 11 | 12 | 13 | 14 | 15 | 16 | 17 | 18 |
| Stromdichte bei 1 mm Membrandicke [mA/cm²] | 0.013 | 0.11 | 0.49 | 0.92 | 0.99 | 1.21 | 1.31 | 2.17 |

Nach längstens 600h Laufzeit wurden die Elektrodialysen beendet und die Membran jeweils entnommen. Die Goldbeschichtung war unversehrt; vgl. Figur 10, welche eine Fotographie von der Membran aus Beispiel 2 zeigt.

### Fazit aus Elektrodialyseversuchen

Die Säurebehandlung verbessert die Haltbarkeit der Goldschicht über einen längeren Zeitraum. Die Säurebehandlung mit HCl führt zu einer höheren Stromdichte bei den auf 1mm Membranstärke normierten Ergebnissen. Beste Ergebnisse konnten mit einer in-situ Behandlung erzielt werden. (Beispiel 27).

### Beispiele 28 bis 32: Untersuchung des Einflusses der Kontaktierung

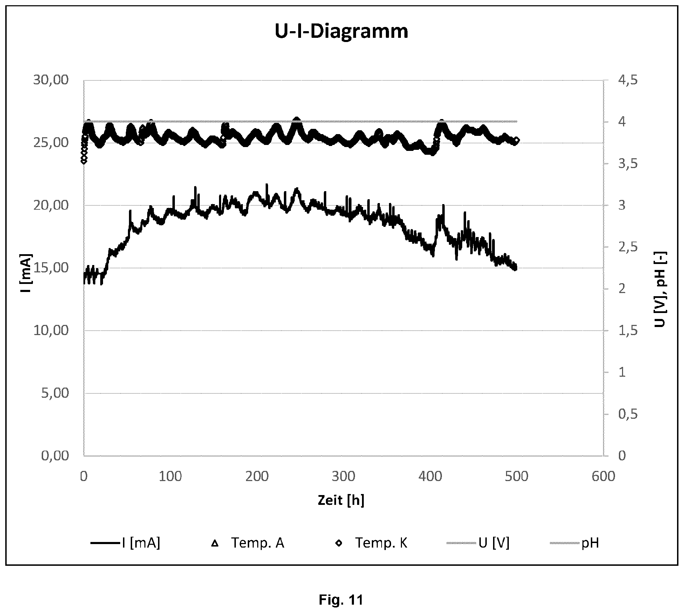

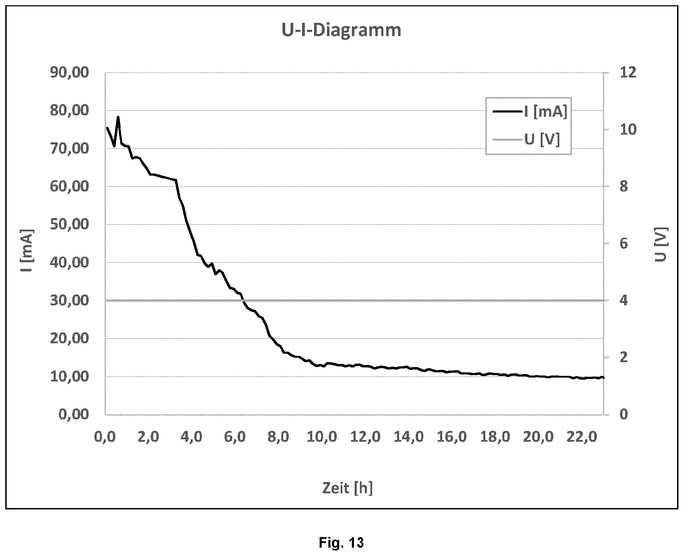

Um die Auswirkungen der Kontaktierung der Elektroden auf die Membran zu untersuchen, wurde die aus Beispiel 18 erhaltene Membran in verschiedene Ausführungsformen einer elektrochemischen Zelle eingebaut. Sodann wurde mit dem jeweiligen Messaufbau einer Elektrodialyse unterzogen. Als Anolyt wurde 1 M LiOH in Wasser verwendet, als Katholyt 5 mM LiOH in Wasser. Die Spannung *U* der ersten elektrischen Spannungsquelle betrug in allen Versuchen 4 V, außer bei Beispiel 32. Dort betrug sie 6V. Die Spannung der zweiten elektrischen Spannungsquelle Win Beispiel 31 und 32 betrug 3 V. Der Verlauf der Spannung und des Stroms geht beispielhaft aus den in den Figuren 11 bis 13 dargestellten Graphen hervor. Diese zeigen den zeitlichen Messverlauf der entsprechenden Daten und geben darüber einen Hinweis, was mit der Beschreibung "starke Alterung" bzw. "kaum Alterung" einer Membran in der Anwendung gemeint ist. Eine Übersicht über diese Beispiele bietet Tabelle 4.

**Tabelle 4: Übersicht Kontaktierungsversuche**

| Beispiel Kontaktierung | 28 | 29 | 30 | 31 | 32 |
|---|---|---|---|---|---|
| Ausführungsform der Zelle | 1 | 2 | 3 | 4 | 4 |
| Spannung U | 4V | 4V | 4V | 4V | 6V |
| Spannung W | | | | 3V | 3V |
| Diagramm | Fig. 11 | Fig. 12 | | Fig. 13 | |
| Alterungsverhalten | Kaum Alterung über 400h Messzeit | Kaum Alterung über 75h, dann starke Alterung bis ca. 400h Messzeit | Kaum Alterung über 90h, dann sehr starke Alterung und Versuchsende durch Versagen der Membran. | Sehr starke Alterung innerhalb von 22h. | Sehr starke Alterung innerhalb von 24h. |
| Maximale lineare Stromdichte einer 1mm dicken Membran | Ca. 4 bis 5 mA/cm² | Ca. 5 mA/cm² | Ca. 4 bis 5 mA/cm² | Ca. 5.8 mA/cm² | 3.2 mA/ cm² |

### Fazit aus Kontaktierungsversuchen

Die von SASAKI et al vorgeschlagene direkte Anordnung der Elektroden auf der Membran (Beispiele 29, 30, 31, 32) zeigen zu Beginn der Elektrodialysen die höchsten Stromdichten bei vorgegebener Spannung von 4V, aber in dieser Anordnung zeigten die Membranen eine starke Alterung. Als Alterung wird hier die relativ schnelle Abnahme der Stromdichte bei konstanter Spannung über die Zeit gesehen. Je schneller diese fällt, umso stärker altert die Membran. Sobald die Stromdichte unter einen zu 50% der Startstromdichte definierenden Grenzwert abgefallen ist, werden die Elektrodialysen abgebrochen und die Membran muss ausgetauscht werden. Die Ausführungsformen ohne Kontaktierung (Beispiel 28) führen zu keiner signifikanten Alterung über Wochen, selbst bei erhöhten Temperaturen von 50°C zeigt sich nur eine geringe Alterung.

Der Vergleich mit Beispiel 19a zeigt, dass eine beidseitige Vergoldung mit der von SASAKI et. al. vorgeschlagenen direkten Kontaktierung beider Seiten kein besseres Ergebnis erzielt.

### Beispiel 33: Untersuchung des Einflusses der Temperatur

Um den Einfluss der Temperatur zu untersuchen, wurde die aus Beispiel 18 erhaltene Membran in eine elektrochemische Zelle der ersten Ausführungsform eingebaut. Sodann wurde eine Elektrodialyse bei steigenden Temperaturen betrieben. Als Anolyt wurde 1 M LiOH wässrige Lösung eingesetzt, als Katholyt 5mM LiOH. Die Spannung betrug 4 V.

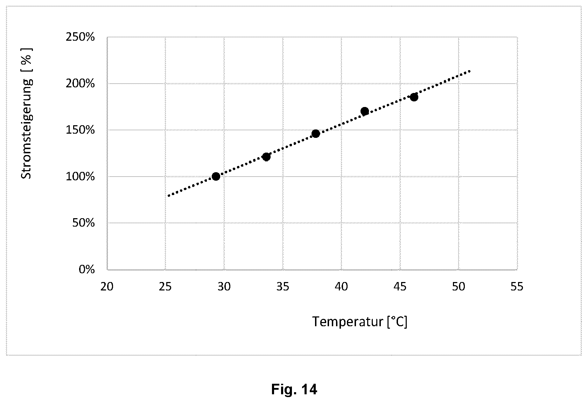

Der Verlauf der Stromsteigerung I_{T}/I₀ ist in Figur 14 dargestellt. Darin beschreibt I_{T} den Strom bei der jeweiligen Temperatur und I₀ den Strom bei Raumtemperatur.

### Fazit aus Temperaturuntersuchung

Die Erhöhung der Temperatur bewirkt eine Steigerung des Stroms auf bis zu nahezu 200% des Stroms, der bei Raumtemperatur gemessen wurde. Im Betrieb einer elektrochemischen Zelle erwärmen sich die Elektrolyte häufig durch die anliegende Spannung und durch Energieverluste der Umwälzpumpen. Da diese Temperaturerhöhung einen positiven Effekt auf die Performance der Membran und somit der elektrochemischen Zelle hat, werden keine Kühlmaßnahmen getroffen, um die Elektrolyttemperaturen in der Anwendung signifikant zu reduzieren.

### Beispiel 34: Untersuchung des Einflusses der Spannung

Um den Einfluss der elektrischen Spannung zu untersuchen, wurde die aus Beispiel 18 erhaltene Membran in eine elektrochemische Zelle der ersten Ausführungsform eingebaut. Sodann wurde eine Elektrodialyse bei steigenden Spannungen betrieben. Als Anolyt wurde 1 M LiOH wässrige Lösung eingesetzt, als Katholyt 5 mM LiOH.

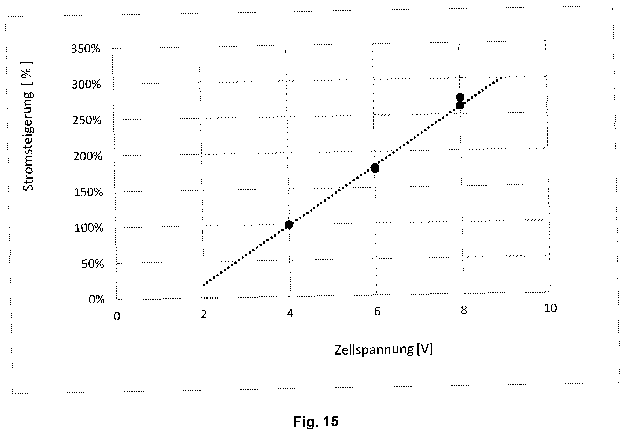

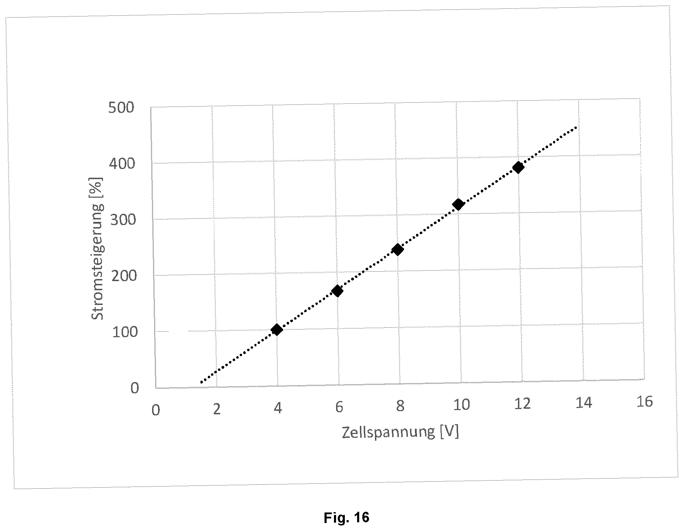

Der Verlauf der Stromsteigerung I_{U}/I₀ ist in Figur 15 und 16 dargestellt. Darin beschreibt I_{U} den Strom bei der jeweiligen Spannung und I₀ den Strom bei einer Spannung von 4V. Dargestellt sind die Messpunkte aus mehreren Messreihen (Figur 15: mehrere Versuche mit Variation der Spannung zwischen 4V und 8V, und Figur 16: ein Versuch mit Variation der Spannung zwischen 4V und 12 V) mit verschiedenen Membranen im Spannungsbereich von 2 bis 12V, die nur geringfügig voneinander abweichen. Ab ca. 8V ist der Strom über die Zeit betrachtet mit einer stärkeren Alterung der Membran verbunden, so dass hier eine Abweichung verschiedener Versuchsergebnisse zu messen ist, welche je nach Dauer der Messung variiert.

Eine Extrapolation des linearen Zusammenhangs auf 0% Improved current (Schnittpunkt mit der X-Achse) gibt den Summenwert für die Spannung an, die zur gleichzeitig in den Zellen ablaufenden anodischen und kathodischen Wasserspaltung an den Elektroden benötigt wird, erhöht um den Spannungsabfall aufgrund des Innenwiderstandes der Zellen.

### Fazit aus Spannungsuntersuchung

Die Erhöhung der Spannung bewirkt eine nahezu lineare Steigerung des Stroms bei niedrigen Spannungen. Bei deutlich höheren Spannungen kommt es zu Abweichungen vom hier beschriebenen Verhalten, welches dann auch mit einer verstärkten Alterung verbunden ist. Daher sind hohe Spannungen von über 12V, idealerweise von über 8V in der Anwendung zu vermeiden.

### Zusammenfassung der Versuchsergebnisse:

Aus den Versuchen lässt sich ableiten, dass bei erfindungsgemäßer Behandlung der LLTO-Membranoberfläche die Leistung der Membran deutlich gesteigert werden kann. Eine Stromdichte von ca. 20A /m² ist für eine 1mm dicke Membrane bei 4V Spannung über den Versuchsaufbau (ca. 2V Spannungsabfall über die Membrane) leicht erreichbar. Unter der Berücksichtigung der möglichen Steigerung der Stromdichte durch Erhöhung der Spannung (+100% pro 2V) und Erhöhung der Temperatur ( +100% bei einer Temperatur von ca. 50°C), so ist leicht abzuschätzen, dass Stromdichten von ca. 200 A / m² bei nur 12V und 50°C möglich sind, Eine technisch leicht umsetzbare Reduktion der Membrandicke auf 0.5 mm würde weitere 100% Erhöhung auf ca. 400 A / m² erlauben.

Die maximal erreichbare Stromdichte ist über solch lange Zeiträume bisher nicht für LLTO-Membranen beschrieben worden.

### Bezugszeichenliste

- 0: elektrochemische Zelle
- 1: erstes Kompartiment
- 2: zweites Kompartiment
- 3: Membran
- 31: Festkörper
- 32: säurebehandelte Oberfläche
- 33: (erste) Goldschicht (anodenseitig)
- 34: zweite Goldschicht (kathodenseitig)
- 4: Anode
- 5: Kathode
- 6: Hilfselektrode
- 7: Anolyt
- 8: Katholyt
- 9: (erste) elektrische Spannungsquelle
- 10: erste elektrische Leitung
- 11: zweite elektrische Leitung
- 12: dritte elektrische Leitung
- 13: zweite elektrische Spannungsquelle
- 14: vierte elektrische Leitung
- Aₐₐ: Flächeninhalt der ersten aktiven Fläche der Membran
- Aₐₖ: Flächeninhalt der zweiten aktiven Fläche der Membran
- U: (erste) elektrische Spannung
- W: zweite elektrische Spannung
- *c*₁(*t*): Konzentration von Li'-Kationen im Anolyt
- *c*₂(*t*): Konzentration von Li'-Kationen im Katholyt
- H₂O: Wasser
- H₂: Wasserstoff
- O₂: Sauerstoff
- H⁺: Protonen
- Li⁺: Lithium-Kationen
- OH⁻: Hydroxid-Anionen
- Na⁺: Lithium-Kationen
- Cl⁻: Chlorid-Anionen
- SO₄²-: Sulfat-Anionen
- LiOH: Lithiumhydroxid

## Patentansprüche

1. Verfahren zur Herstellung von Wasserstoff und Lithiumhydroxid mit den folgenden, nicht chronologischen Schritten:
a) Bereitstellen von mindestens einer elektrochemischen Zelle, wobei die elektrochemische Zelle mindestens die folgenden Merkmale aufweist:
i. die elektrochemische Zelle umfasst ein erstes Kompartiment, welches mit einem wässrigen Anolyt gefüllt ist;
ii. die elektrochemische Zelle umfasst ein zweites Kompartiment, welches mit einem wässrigen Katholyt gefüllt ist;
iii. die elektrochemische Zelle umfasst eine zwischen dem ersten Kompartiment und dem zweite Kompartiment angeordnete, zweiseitige Membran, welche auf ihrer ersten Seite über eine erste aktive Fläche mit dem Anolyt in Kontakt steht und welche auf ihrer zweiten Seite über eine zweite aktive Fläche mit dem Katholyt in Kontakt steht, wobei die Membran ein Lithium-Lanthan-Titanoxid der Stöchiometrie LLTO enthält:
Li₃ₓLa_{(2/3)-x□(1/3)-2x}TiO₃ (LLTO)
worin in LLTO gilt: 0≤x≤0.16 und wobei das Lithium-Lanthan-Titanoxid optional dotiert sein kann mit mindestens einem Dotierelement, welches ausgewählt ist aus der Gruppe bestehend aus den folgenden Dotierelementen: Ag, Al, Zr, Nd, Sr, Ta, Y, Ge, Nb;
iv. die elektrochemisch Zelle umfasst eine Anode, welche mit dem Anolyt kontaktiert ist;
v. die elektrochemisch Zelle umfasst eine Kathode, welche in dem Katholyt kontaktiert ist;
vi. die elektrochemische Zelle umfasst eine elektrische Spannungsquelle, welche über eine erste elektrische Leitung mit der Anode verbunden ist und welche über einer zweite elektrische Leitung mit der Kathode verbunden ist;
b) Bereitstellen von gelöstem Lithiumsalz im Anolyt;
c) Beaufschlagen der elektrochemischen Zelle mit einer zwischen Anode und Kathode wirkenden elektrischen Spannung U mit Hilfe der
elektrischen Spannungsquelle;
d) Synthese von Lithiumhydroxid im Katholyt;
e) Synthese von Wasserstoff im Katholyt;
**dadurch gekennzeichnet,**
**dass** die Membran auf ihrer ersten Seite flächig vergoldet ist.

2. Verfahren nach Anspruch 1, wobei die erste aktive Fläche den Flächeninhalt Aₐₐ einnimmt,
**dadurch gekennzeichnet,**
**dass** mindestens 80% des Flächeninhalts Aₐₐ der ersten aktiven Fläche vergoldet ist; oder
**dass** 90% bis 100% des Flächeninhalts Aₐₐ der ersten aktiven Fläche vergoldet ist.

3. Verfahren nach Anspruch 1 oder 2, wobei die zweite aktive Fläche den Flächeninhalt Aₐₖ einnimmt,
**dadurch gekennzeichnet,**
**dass** höchstens 10% des Flächeninhalts Aₐₖ der zweiten aktiven Fläche vergoldet ist; oder
**dass** 0% bis 1% des Flächeninhalts Aₐₖ der zweiten aktiven Fläche vergoldet ist.

4. Verfahren nach einem der Ansprüche 1 bis 3, **dadurch gekennzeichnet, dass** die Anode von der Membran beabstandet ist.

5. Verfahren nach einem der Ansprüche 1 bis 4, **dadurch gekennzeichnet, dass** die Kathode von der Membran beabstandet ist.

6. Verfahren nach einem der Ansprüche 1 bis 5, **gekennzeichnet durch** die Anwesenheit von kationischen Verunreinigungen in dem Anolyt, wobei es sich bei den kationischen Verunreinigungen um Kationen von Elementen handelt, die ausgewählt sind aus der Gruppe bestehend aus B, Na, Mg, Al, Si, K, Ca, Mn, Co, Ni, Cu.

7. Verfahren nach Anspruch 6, wobei der Anolyt Na⁺ als kationische Verunreinigung enthält, **dadurch gekennzeichnet, dass** die Konzentration von Na⁺ in dem Anolyt zwischen 0 Mol-% und 20 Mol-% beträgt, bezogen auf den Gehalt an Lithium im Anolyt.

8. Verfahren nach einem der Ansprüche 1 bis 7, **gekennzeichnet durch** die Anwesenheit von Fremd-Anionen im Anolyt, wobei die Fremd-Anionen ausgewählt sind aus der Gruppe bestehend aus Sulfat, Hydrogensulfat, Carbonat, Hydro-gencarbonat, Chlorid, Fluorid, und wobei das molare Verhältnis der Summe aller in im Anolyt enthaltener Fremd-Anionen zu den im Anolyt enthaltenen Hydroxid-Ionen kleiner ist als 1 Mol zu 1 Mol.

9. Verfahren nach einem der Ansprüche 1 bis 8, bei welchem zusätzlich Sauerstoff hergestellt wird, **gekennzeichnet durch** den folgenden Schritt:
g) Synthese von Sauerstoff im Anolyt.

10. Verfahren nach einem der Ansprüche 1 bis 9, durchgeführt bei einer elektrischen Spannung *U* im Bereich von 3 V bis 12 V oder von 4 V bis 8 V und bei einer Stromdichte *i* zwischen 10 A/m² und 500 A/m², wobei die Stromdichte *i* sich berechnet als Quotient des elektrischen Stroms *I*, welcher über die elektrische Spannungsquelle fließt, und des Flächeninhalts der ersten aktiven Fläche auf der ersten Seite der Membran: $I = i / {A}_{aa}$

11. Verfahren nach einem der Ansprüche 1 bis 10, **dadurch gekennzeichnet, dass** das Lithium-Lanthan-Titanoxid eine der folgenden Stöchiometrien aufweist:
Li_{0.33}La_{0.55}TiO₃
oder
Li_{0.29}La_{0.57}TiO₃

12. Verfahren nach einem der Ansprüche 1 bis 11, weiter umfassend den folgenden Schritt:
h) Abtrennen von Lithiumhydroxid und/oder Lithiumhydroxid-Monohydrat aus dem Katholyt.

13. Verfahren nach einem der Ansprüche 1 bis 12, **dadurch gekennzeichnet, dass** die elektrochemische Zelle bei einer Temperatur zwischen 30°C und 60°C betrieben wird.
